# EUROPÄISCHE PATENTANMELDUNG

(11) **EP 1 704 830 A1**
(43) Veröffentlichungstag der Anmeldung: **27.09.2006**
(21) Anmeldenummer: 06075653.3
(22) Anmeldetag: 17.03.2006
(51) Int. Cl.: A61C 8/00

(54) **Implantatanalog**

(30) Priorität: 24.03.2005 DE 102005014582; 07.06.2005 DE 102005027184
(71) Anmelder: Biomed Est., 9490 Vaduz (LI)
(72) Erfinder: Menzel, Bernhard, 70469 Stuttgart (DE); Ihde, Stefan, 8738 Uetliburg (CH)
(74) Vertreter: Radwer, Dieter

(57) **Zusammenfassung**

Die Erfindung betrifft ein verbessertes Implantatanalog zur passgenauen Herstellung von prothetischen Aufbauten für inserierte Zahnimplantate.

Die anatomische Ausbildung des Kiefers lässt oftmals kein lotgerechtes Einbringen der Zahnimplantate zu. Dadurch entstehen zwangsläufig Probleme bei der Herstellung des prothetischen Implantataufbaus, die mit höheren Aufwendungen und Kosten verbunden sind

Die Erfindung behebt diese Nachteile und schlägt ein Implantatanalog 2 vor, dessen lmplantatkopf 5, eine Arbeitsfläche 11 und ein unterschiedlich konfiguriertes Anschlussstück 12 für die Aufnahme und Befestigung des anzufertigenden Implantataufbaus besitzt, während an der fußseitigen Stirnfläche 35 des Implantatanaloges 2 ein zapfenartiger Ansatz 36 mit einem Außengewinde für den Anschluss eines Schraubelementes 39, 54, 58 vorgesehen ist.

Das Implantatanalog kann für Einzelzahnimplantate und für Implantatbrücken gleichermaßen eingesetzt werden.

## Beschreibung

Die Erfindung betrifft ein Implantatanalog zur passgenauen Herstellung von prothetischen Aufbauten auf Zahnimplantaten unter Verwendung eines Meistermodells.

Implantatanaloge repräsentieren das im Munde des Patienten befindliche Implantat. Sind auf dem Implantat bereits Abutments montiert worden, so können Implantatanaloge auch die Abutments repräsentieren. Ebenso können Implantatanaloge bei einigen Implantatsystemen auch Teile des Abutments und des Implantats repräsentieren.

Implantatanaloge, die bei der Herstellung von Meistermodellen für die anschließende passgenaue Herstellung der Suprakonstruktion in exakter Übereinstimmung mit den im Kieferknochen inserierten Implantaten eingesetzt werden, sind an sich bekannt. Das Implantatanalog wird in das Meistermodell eingegossen, wobei am Kopf des Implantatanaloges der zukünftige Zahnimplantataufbau befestigt und nach seiner Fertigstellung auf die inserierten Implantate im Mund des Patienten übertragen wird.

Die anatomische Ausbildung des Kiefers (Morphologie) der Patienten lässt oftmals kein lotgerechtes Einbringen der Zahnimplantate zu. Dadurch bereitet es erhebliche Schwierigkeiten, die Implantatanaloge bei der Fertigung der Meistermodelle so anzuordnen, dass auch bei nicht lotrecht sitzenden Implantaten eine einfache Herstellung und Handhabung der Wachsmodellation und des gegossenen Gerüsts bei der Arbeit auf dem Meistermodell möglich ist.

Der Erfindung liegt die Aufgabe zugrunde, das gattungsgemäße Implantatanalog so auszubilden, dass die Arbeitsmodelle für die implantatgestützte zahntechnische Arbeit zuverlässig und einfach hergestellt werden können.

Diese Aufgabe wird beim gattungsgemäßen Implantatanalog erfindungsgemäß mit den kennzeichnenden Merkmalen nach Anspruch 1 gelöst.

Beim erfindungsgemäßen Implantatanalog besitzt der Implantatkopf eine Arbeitsfläche und ein unterschiedlich konfiguriertes Anschlussstück für die Aufnahme und Befestigung des anzufertigenden Implantataufbaus, während an der fußseitigen Stirnfläche des Implantatanaloges ein zapfenartiger Ansatz mit einen Außengewinde für den Anschluss eines Schraubelementes vorgesehen ist. Ergänzend hierzu ist der Grundkörper des Implantatanaloges zumindest über einen Teil seiner Länge im Querschnitt verjüngt ausgebildet und ermöglicht dadurch, das Implantatanalog dem Meistermodell spannungsfrei zu entnehmen.

Weitere Merkmale der Erfindung ergeben sich aus den Ansprüchen, der Beschreibung und den Zeichnungen.

Die Erfindung wird anhand einiger in den Zeichnungen dargestellter Ausführungsformen näher erläutert. Es zeigen
- Fig. 1: den Teilschnitt eines Meistermodells in teilweiser perspektivischer Darstellung mit eingesetzten erfindungsgemäßen Implantatanalogen,
- Fig. 2: eine vergrößerte und perspektivische Darstellung des erfindungsgemäßen Implantatanaloges,
- Fig. 3: eine weitere Ausführungsform des Implantatanaloges nach Fig. 2,
- Fig. 4: eine dritte Ausführungsform des Implantatanaloges entsprechend Fig. 2, bei der die Arbeitsoberfläche winklig zur Längsachse des Grundkörpers des Implantatanaloges angeordnet ist,

- Fig. 5: die perspektivische Darstellung einer Ausgleichshülse für das Implantatanalog,
- Fig. 6: die perspektivische Darstellung einer Außenhülse für die Ausgleichshülse des Implantatanaloges,
- Fig. 7: die Unterseite der Außenhülse in perspektivischer Darstellung,
- Fig. 8: eine weitere Ausführung eines Implantatanaloges nach der Erfindung, das im Meistermodell mit einem Gegenstück verschraubt werden kann,
- Fig. 9: die Draufsicht auf das Implantatanalog nach Fig. 8 gemäß Richtungspfeil IX mit ovaler Ausbildung des Haltekonus, der im Meistermodell eingegossen wird,
- Fig. 10 und Fig. 11: Ausführungsvarianten des Implantatanaloges nach Fig. 8 und 9,
- Fig. 12 und Fig. 13: die Anordnung von Implantatanalogen nach der Erfindung, die in Außenhülsen eingesetzt und mit diesen verschraubt sind,
- Fig. 14: eine weitere, besonders vorteilhafte Ausführungsform, bei der das Implantatanalog an seiner Unterseite mit einem kegelförmigen Gegenstück verschraubt wird.

Die im folgenden beschriebenen Implantatanaloge werden entsprechend dem im Abdruck zur Verfügung stehenden Platz ausgewählt und in den Abdruck eingebracht, wobei sie reversibel mit dem Abdruckpfosten verbunden werden. Anschließend wird der Abdruck ausgegossen und, es entsteht das Meistermodell. Die Implantatanaloge sind für Einzelzahnimplantate und für Implantatbrücken sowie für Teleskoparbeiten oder Zirkonarbeiten im zahntechnischen Dentallabor gleichermaßen geeignet und können, mit entsprechender Arbeitsoberfläche, für jedes Implantatsystem verwendet werden.

In der Implantattechnik werden als Wurzelersatz zunächst Formkörper, die vorzugsweise aus Titan bestehen und in der Regel durch ein Implantat gebildet werden, in eine vorgebohrte Kavität im Kieferknochen eingepflanzt. An diesem Formkörper bzw. Implantat wird ein in der Regel aus Titan bestehendes Distanzteil oder Abutment befestigt, an dem später dann der künstliche Zahn oder die Suprakonstuktion verankert wird. Damit der künstliche Zahn oder auch eine Zahnbrücke genau an den Kiefer angepasst werden kann, wird ein naturgetreues Modell des Kiefers des Patienten angefertigt. Mit einem mit Abdruckmasse gefüllten Abdrucklöffel wird zunächst ein Negativabdruck des Kiefers unter Verwendung von systemspezifischen Abdruckpfosten als Übertrager hergestellt. Er wird vom Kiefer abgenommen und mit einem Gießmaterial gefüllt, das nach dem Aushärten das naturgetreue Modell des Kiefers des Patienten ist. Anstelle des Implantats wird im sogenannten Meistermodell ein Implantatanalog eingesetzt, das im Meistermodell hinsichtlich seiner Arbeitsoberfläche genau so ausgerichtet und positioniert ist wie das Implantat im Kiefer des Patienten. Ein Ausgleich von Implantatdivergenzen kann nun durch das erfindungsgemäße Implantatanalog in sehr vorteilhafter Weise erfolgen.

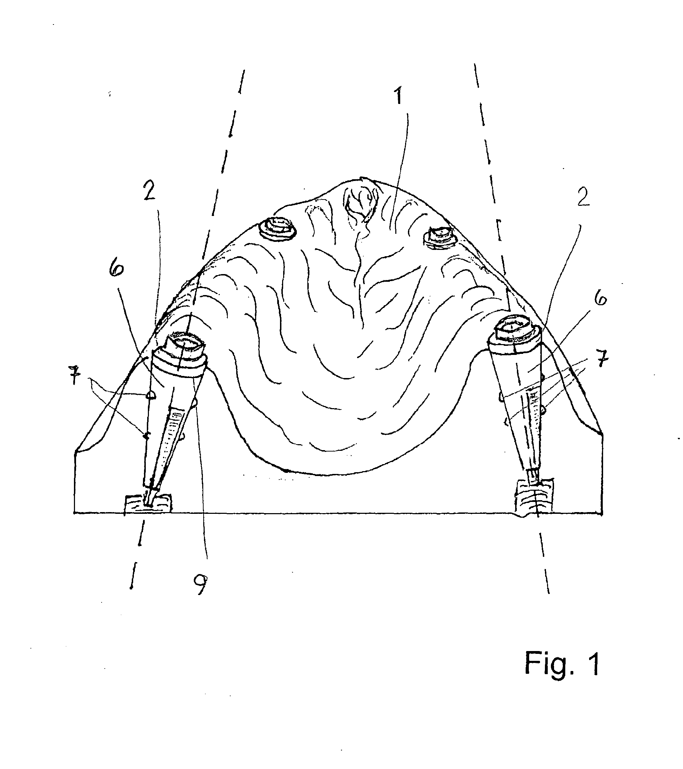

Fig. 1 zeigt ein solches Meistermodell 1 mit vier Implantatanalogen 2. Ihre Grundkörper sind genau in der Position und Ausrichtung wie die Implantat-Arbeitsoberflächen im Mund des Patienten in das Meistermodell 1 eingebettet. Die Implantatanaloge 2 verjüngen sich in Einsetzrichtung und können ansonsten einen beliebigen Querschnitt haben, wie noch erläutert wird.

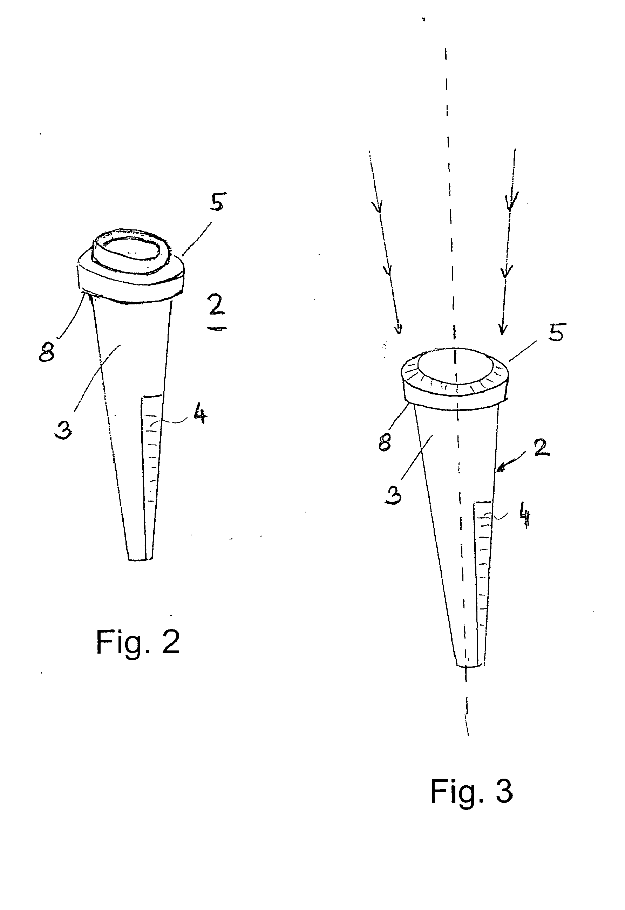

Wie Fig. 2 zeigt, besitzt das Implantatanalog 2 einen kreisförmigen Querschnitt und einen konischen Grundkörper 3, der an seiner Außenseite wenigstens eine Abflachung 4 aufweist, die als Verdrehschutz für das Implantatanalog 2 dient. Als Verdrehschutz kann der Grundkörper 3 beispielsweise auch mit wenigstens einer längs verlaufenden Nut versehen sein. Im dargestellten Ausführungsbeispiel erstreckt sich der Verdrehschutz 4 vom freien Ende des Grundkörpers 3 aus etwa über dessen halbe Länge. Selbstverständlich kann der Verdrehschutz 4 auch kürzer oder länger oder nur an der Basis des Implantatanaloges 2, also genau gegenüber der Arbeitsoberfläche 5 angebracht sein.

Auf dem breiteren Ende des Grundkörpers 3 sitzt ein Kopf 5, der in bekannter Weise - entsprechend dem jeweiligen Implantatsystem - ausgebildet sein kann. Der Kopf 5 bildet eine Arbeitsoberfläche, die der Oberfläche des im Kieferknochen befindlichen Implantats entspricht. Die zahntechnische Arbeit wird in Pfeilrichtung auf das Modellanalog aufgesetzt,

Die Konizität des Grundkörpers 3 ist je nach Größe, Länge und Form des Implantatanaloges 2 unterschiedlich. Im Ausführungsbeispiel beträgt der Konuswinkel nur wenige Grad und liegt im Bereich von etwa 15°. Aufgrund der Konizität lassen sich die Implantatanaloge auch für nicht lotrecht in den Kieferknochen eingesetzte Implantate verwenden. Die Angulation des Implantatanaloges gleicht in diesem Fall die relative Angulation der Implantate zueinander aus und sorgt dafür, dass die Brücke einstückig und gegebenenfalls zusammen mit den Implantatanalogen vom Meistermodell abgenommen werden kann. Die Implantatanaloge 2 werden vorteilhafter Weise so verwendet, dass sie aus dem Meistermodell 1 herausgenommen und wieder eingesetzt werden können. Dadurch ist es insbesondere möglich, ein Modell für Implantatbrücken mittels Wachs so herzustellen, dass sich die modellierte Wachsbrücke aus dem Meistermodell 1 zusammen mit den konischen Implantatanalogen 2 verzugs- und spannungsfrei herausnehmen lässt. Darüber hinaus kann jedes einzelne Implantatanalog 2 problemlos einzeln aus dem Meistermodell 1 heraus genommen werden. Ein Verziehen der Modulation beim Abnehmen vom Gerüst ist dadurch ausgeschlossen, so dass das bei den herkömmlichen Ausbildungen erforderliche mühsame Löten und Lasern durch Verzug oder eine Neuanfertigung entfällt.

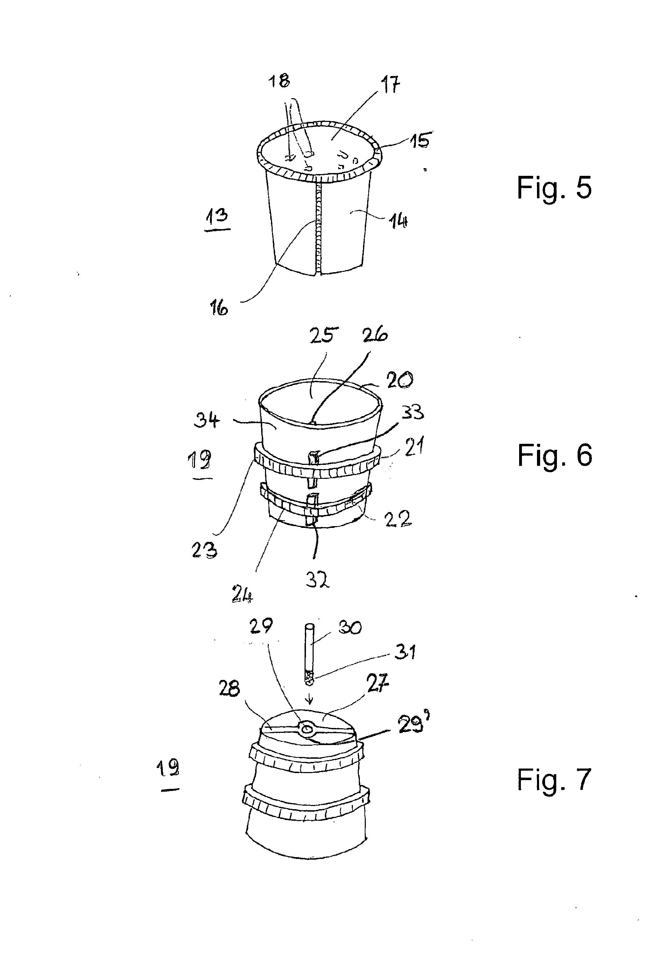

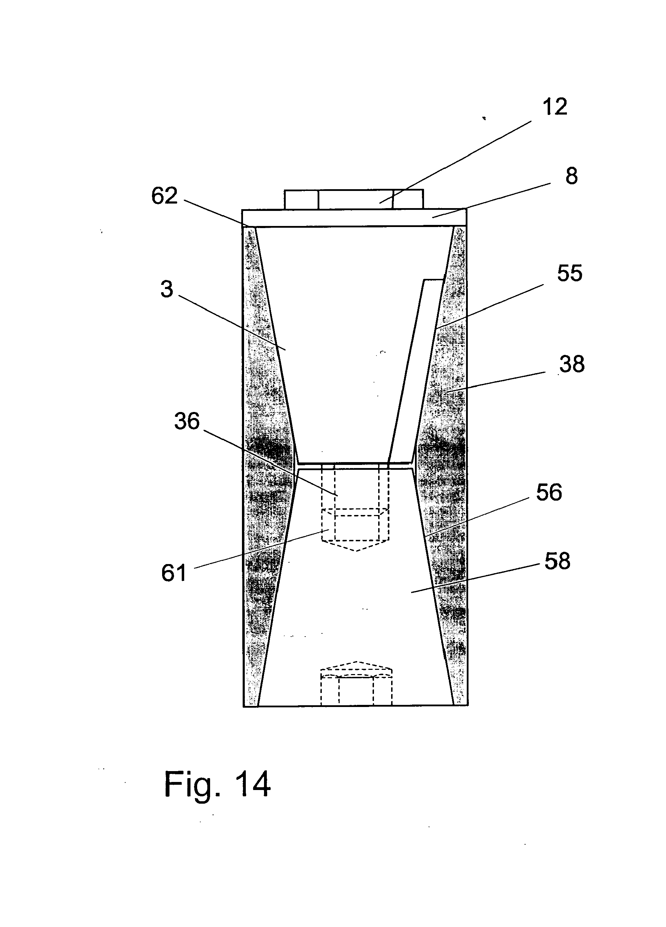

Um das Implantatanalog besser lösbar im Meistermodell 1 anordnen zu können, wird optional eine Hülse 6 verwendet (Fig. 1), die ebenfalls konisch (Fig. 5-6) oder doppelt konisch (Fig.14) ausgebildet ist und eine Innenform hat, die der Außenform des im Modell einzubettenden Teils des Implantatanaloges 2 entspricht. Die Hülsen 6, 14, 34, 38 sind an ihrer Außenseite vorzugsweise mit Retentionen 7, 16, 21, 22, 52, 52' versehen, mit denen sie im Meistermodell 1 sicher verankert werden können. Diese Retentionen 7, 16, 21, 22, 52, 52' können jede geeignete Gestalt haben. Die Hülsen werden bei der Herstellung des Meistermodells 1 in das Modell eingegossen, wobei die Retentionen gleichzeitig als Sicherung gegen eventuelles Verdrehen dienen.

Damit kontrolliert werden kann, dass der Grundkörper 3 des Implantatanaloges 2 sicher in der Hülse 6, 14, 34, 50, 38 sitzt, weist die Hülse oder das Implantatanalog 2 in dem nach dem Ausgießen des Modells einsehbaren Bereich einen definierten Übergangsbereich zum Implantatanalog 2, vorzugsweise eine Stufe bzw. ein Bund 8 auf, der über das breitere Ende des Grundkörpers 3 radial übersteht. Das Implantatanalog 2 wird so weit in die Hülse 6 eingesetzt, dass das Implantatanalog 2 mit dem Bund 8 auf der Stirnseite 9 der Hülse vorzugsweise bündig aufliegt. Die Hülse 6, 14, 34, 50, 38 kann aus Kunststoff oder Metall oder einem ähnlich stabilen Material hergestellt sein. Da der Bereich, in dem der Bund 8 des Implantatanaloges 2 an der Stirnseite 9 der Hülse 6, 14, 34, 50, 38 anliegt, durch eine abnehmbare Papille freigelegt werden kann, ist jederzeit eine optische Kontrolle des einwandfreien Sitzes des Implantatanaloges 2 in der Hülse 6, 14, 34, 50, 38 gewährleistet. Der Kopf 5 ist zentrisch mit einem vorstehenden Anschlussstück 12 versehen.

Fig. 3 zeigt ein Implantatanalog 2, das bis auf den Kopf 5 gleich ausgebildet ist wie das Implantatanalog nach Fig. 2. Es hat ebenfalls einen konischen Grundkörper 3, der mit wenigstens einem Verdrehschutz 4 versehen ist. Im vorliegendem Ausführungsbeispiel ist der Verdrehschutz 4 als Abflachung ausgebildet. Am Übergang vom Kopf 5 zum Grundkörper 9 befindet sich ein Bund 8, mit dem das Implantatanalog 2 in der vorbeschriebenen Weise an der Stirnseite 9 der Hülse 6, 14, 34, 50, 38 anliegt, wenn das Implantatanalog 2 herausnehmbar im Meistermodell 1 angeordnet ist. Im Unterschied zur vorigen Ausführungsform hat der Kopf 5 kein Anschlussstück.

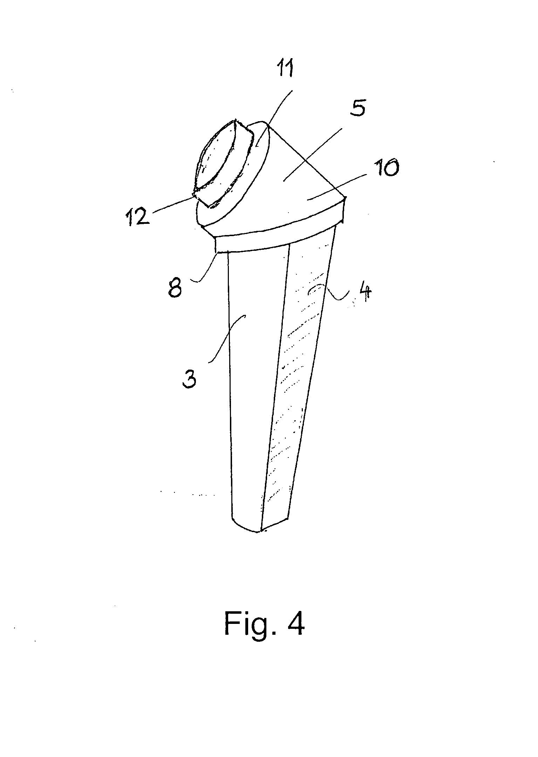

Fig. 4 zeigt eine Ausführungsform, bei der der Kopf 5 abgewinkelt zum Grundkörper 3 angeordnet ist. Der Grundkörper 3 ist wiederum konisch ausgebildet und weist wenigstens einen Verdrehschutz 4 auf, der beispielsweise als Abflachung an der Außenseite des Grundkörpers 3 vorgesehen ist. Im Unterschied zu den vorigen Ausführungsbeispielen erstreckt sich dieser Verdrehschutz über die gesamte Länge des Grundkörpers 3. Am Übergang vom Grundkörper 3 zum Kopf 5 ist ein Bund 8 vorgesehen. Die Achse des Kopfes 5 verläuft unter einem stumpfen Winkel zur Achse des Grundkörpers 3. Der Kopf 5 hat einen zylindrischen Mantel 10 sowie eine ebene Stirnseite 11, über die zentrisch das Anschlussstück 12 ragt. Dieses Implantatanalog 2 wird insbesondere bei nicht lotrecht in den Kiefer eingesetzten Implantaten verwendet, weil die Angulation dafür sorgt, dass alle Implantatanaloge trotz Divergenzen bei den eingesetzten Implantaten in einem Modell in etwa parallel zueinander angeordnet werden können. So kann später das prothetische Werkstück in einem Stück mit den Implantatanalogen aus dem Meistermodell 1 entnommen werden.

Bei extrem nicht lotgerecht inserierten Implantaten wird eine Ausgleichshülse eingesetzt, die anhand von Fig. 5 bis 7 beschrieben wird. Bei Verwendung dieser Hülsen können auch Standardimplantatanaloge verwendet werden. Die Ausgleichshülse wird dann eingesetzt, wenn die Neigung groß ist und beispielsweise mehr als etwa 25° beträgt. Die angulierten Implantatanaloge werden vom Zahntechniker entsprechend ausgewählt.

Die Ausgleichshülse 13 gemäß Fig. 5 ist eine Innenhülse, die das Implantatanalog 2 aufnimmt und an der das Implantatanalog befestigt wird. Soll die Innenhülse 13 herausnehmbar im Meistermodell 1 angeordnet sein, wird zusätzlich die in den Fig. 6 und 7 dargestellte Außenhülse 19 verwendet, die im Meistermodell 1 verankert und in welche die Innenhülse 13 gemäß Fig. 5 eingesteckt wird. Die Innenhülse 13 und die Außenhülse 19 sind leicht konisch ausgebildet und können aus Metall oder auch aus Kunststoff bestehen.

Die Ausgleichshülse 13 gemäß Fig. 5 hat einen konischen Grundkörper 14, der an seiner breiteren Seite mit einem radial nach außen gerichteten umlaufenden Rand 15 versehen ist. Am schmaleren Ende ist die Hülse 13 offen ausgebildet. In der Außenseite des Grundkörpers 14 ist eine sich über die Länge des Grundkörpers 14 erstreckende Nut 16 vorgesehen, die achsparallel verläuft und durch eine Verformung des Mantels des Grundkörpers 14 oder auch durch eine Vertiefung im Mantel des Grundkörpers gebildet sein kann.

Die konische Innenwand 17 des Grundkörpers 14 ist mit Retentionen 18 versehen, die in die Hülse 13 ragen und jede geeignete Form haben können. Durch diese Retentionen 18 ist ein Verbund mit dem später in die Hülse 13 einzubringenden Kunststoff, Harz oder einer Modellmasse gewährleistet.

Der radial überstehende Rand 15 dient als Anschlag, wenn die Hülse 13 in die Hülse 19 gemäß den Fig. 6 und 7 gesteckt wird. Dies ist dann der Fall, wenn die Hülse 13 zusammen mit dem Implantatanalog 2 herausnehmbar im Meistermodell 1 angeordnet wird und bei Bedarf auch wieder in das Meistermodell eingesetzt werden soll. In diesem Falle wird die Hülse 13 als Innenhülse so weit in die Außenhülse 19 gesteckt, bis sie mit dem Rand 15 auf der Stirnseite 20 der Außenhülse 19 bündig aufliegt. Die Außenhülse 19 wird axial fest im Meistermodell 1 verankert und hat zu diesem Zweck auf ihrer konischen Außenseite 34 beispielhaft zwei in Radialebenen liegende umlaufende Stege 21, 22, die einen axialen Abstand voneinander haben und Verankerungsmittel bilden, mit denen die Außenhülse 19 fest im Meistermodell 1 verankert werden kann. Die Stege 21, 22 können an ihrer Mantelfläche 23, 24 mit Profilierungen und dergleichen versehen sein, um die Verankerung im Meistermodell 1 zu verbessern. Um einen Verdrehschutz für die Außenhülse 19 zu erreichen, ist sie mit wenigstens einer quer zu den Stegen 21, 22 verlaufenden Rippe 32, 33 versehen, die über die Außenseite der Außenhülse 19 vorsteht. Im Ausführungsbeispiel sind zwei Rippen 32, 33 vorgesehen, die senkrecht zu den umlaufenden Stegen 21, 22 liegen, die die Rippen 32, 33 in halber Länge kreuzen. Die beiden Rippen 32, 33 liegen auf gleicher Höhe und haben einen Abstand voneinander. Über den Umfang der Außenhülse 19 können weitere Rippen verteilt angeordnet sein. Die Rippen 32, 33 können in Umfangrichtung auch versetzt zueinander liegen und abweichend von der dargestellten Ausbildung jede andere geeignete Formgebung haben, die einen Verdrehschutz der Außenhülse 19 gewährleistet.

An der konischen Innenwand 25 der Außenhülse 19 ist ein in Achsrichtung verlaufender, nach innen vorstehender Steg 26 vorgesehen. Er ist in seiner Gestaltung an die Nut 16 der Hülse 13 angepasst. Wird die Hülse 13 in die Außenhülse 19 gesteckt, dann greift der Steg 26 in die Nut 16 ein, wodurch beide Hülsen 13, 19 verdrehgesichert ineinander sitzen.

Die Außenhülse 19 ist an ihrem schmaleren Ende offen ausgebildet (Fig.7). In der Öffnung 27 ist ein axial verlaufender Steg 28 vorgesehen, der an der Innenseite der Hülse 19 befestigt ist. In halber Länge des Steges 28 bzw. zentrisch zur Öffnung 27 ist ein Ringteil 29 mit einer zentralen Öffnung 29' vorgesehen, in die ein Stift 30 gesteckt werden kann. Er hat kreisförmigen Querschnitt und ist an einem Ende mit Retentionen bzw. Profilierungen 31 versehen, um eine feste Verankerung des Stiftes 30 mit der Gießmasse zu gewährleisten.

Bei der Herstellung des Meistermodells 1 wird zunächst die Außenhülse 19 auf die Innenhülse 13 gesteckt und der Stift 30 in die Öffnung 29' des Steges 28 der Außenhülse 19 eingesetzt. Anschließend wird diese Einheit in ein Parallelometer gespannt, mit dem die Ausgleichshülse 13 und die Außenhülse 19 in der gewählten Richtung über dem schon im Abdruck eingesetzten Implantatanalog fixiert wird. Die Höhe des Stiftes 30 wird durch Verschieben exakt eingestellt. Anschließend wird die Innen bzw. Ausgleichshülse 13 mit einem Flüssigkunststoff oder Harz gefüllt. Hierbei wird das mit den Profilierungen 31 versehene Ende des Stiftes 30 mit eingegossen. Nach der Erstellung des Modells wird über den Kieferbereich der Implantate ein Silikonverguss angefertigt, der zur Herstellung einer abnehmbaren Papille dient. Dadurch ist der Rand 15 der Ausgleichshülse 13 am Gipsmodell freigelegt, so dass der Sitz der Ausgleichshülse 13 in der Außenhülse 19 einwandfrei kontrolliert werden kann.

Infolge der Verwendung der Außenhülse 19 kann die Ausleichs- oder Innenhülse 13 mit dem Implantatanalog aus dem Meistermodell 1 herausgenommen und exakt wieder eingesetzt werden. Falls es auf diese Lösbarkeit nicht ankommt, kann auch die Ausgleichshülse 13 direkt im Meistermodell 1 eingegossen und verankert werden.

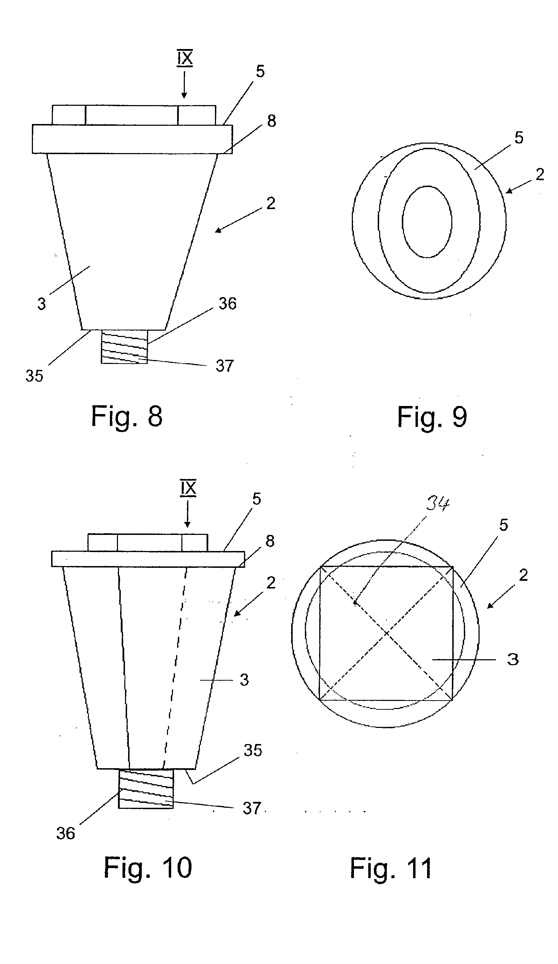

Fig. 8 bis 13 zeigen weitere Ausführungsformen von Implantatanalogen 2, die jeweils andere Querschnittsformen haben.

Das Implantatanalog 2 gemäß Fig. 8 und 9 unterscheidet sich von dem nach Fig. 2 dadurch, dass sein sich in Einsteckrichtung in das Meistermodell 1 gemäß Fig. 1 verjüngender Grundkörper 3 einen ovalen oder elliptischen Querschnitt besitzt. Der Kopf 5 und der Bund 8 sind kreisförmig ausgebildet und haben einen Durchmesser, der größer ist als die maximale Breite des Grundkörpers 3. Aufgrund der unrunden Querschnittsform des Grundkörpers 3 ist ein zusätzlicher Verdrehschutz nicht notwendig.

Die ovale Ausbildung des Grundköpers 2 bzw. des Haltekonus ermöglicht ferner, dieses Implantatanalog 2 ohne weitere Verdrehsicherung direkt in das Meistermodell 1 einzugießen.

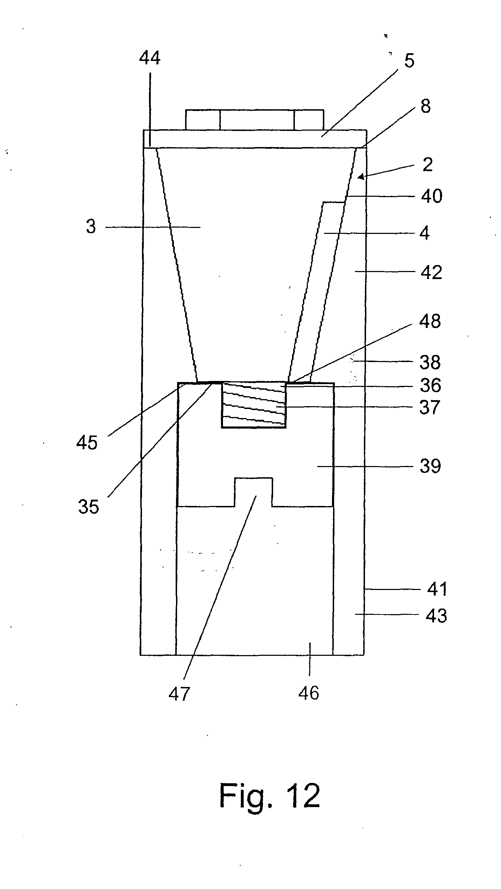

Die kleinere, freie Stirnfläche 35 des Grundkörpers 3 ist im Ausführungsbeispiel größer als bei der Ausführungsform nach Fig. 2. An die freie Stirnfläche 35 ist ein zapfenartiger Ansatz 36 mit einem Außengewinde 37 vorgesehen. Über dieses Außengewinde 37 kann das Implantatanalog 2 in einer Außenhülse 38 mit Hilfe einer Schraube 39 befestigt und mit dieser verschraubt werden - Fig. 12. Anstelle des Ansatzes 36 kann eine Bohrung mit einem Innengewinde vorgesehen sein, in die zur Befestigung des Implantatanaloges 2 in einer Außenhülse 38 eine Schraube oder dergleichen eingeschraubt wird.

Das Implantatanalog 2 nach Fig. 10 und 11 unterscheidet sich von dem zuvor beschriebenen Implantatanalog dadurch, dass sein verjüngt ausgebildeter Grundkörper 3 einen eckigen, im Ausführungsbeispiel quadratischen Querschnitt hat. Der Kopf 5 des Modellanaloges 2 hat kreisförmigen Umriss. Wie Fig. 11 zeigt, hat der Bund 8 einen solchen kreisförmigen Umriss, dass sein Durchmesser der Länge der Diagonale 34 der größten Querschnittsfläche des Grundkörpers 3 entspricht - Fig. 11. Die kleinere Stirnfläche 35 des Grundkörpers 3 trägt wiederum einen zapfenförmigen Ansatz 36 mit einem Außengewinde 37. Anstelle des Ansatzes 36 kann auch eine Bohrung mit einem Innengewinde vorgesehen sein - nicht dargestellt.

Das Implantatanalog 2 nach Fig. 12 entspricht im wesentlichen der Ausführungsform in Fig. 10 und 11. Der Grundkörper 3 ist kreisförmig ausgebildet, während das Anschlussstück 12 eine sechseckige Form aufweist. Als Rotationssicherung dient wiederum eine Abflachung 4, die sich über einen Teil der Länge des Grundkörpers 3 erstreckt und über ihre Längserstreckung vorzugsweise die gleiche Breite besitzt. An die kleinere Stirnfläche 35 des Grundkörpers 3 schließt sich ein zapfenartiger Ansatz 36 mit Außengewinde 37 an. Anstelle dieses Ansatzes 36 kann wiederum eine Bohrung mit einem Innengewinde vorgesehen sein.

Das Implantatanalog 2 wird in eine Außenhülse 38 gesteckt und ist in dieser Außenhülse 38 durch eine Schraube 39 befestigt, die auf den Ansatz 36 aufgeschraubt wird. Die Außenhülse 38 hat einen Aufnahmeteil 42 für den Grundkörper 3 des Implantatanaloges 2 und besitzt eine konische Aufnahme 40, an deren Innenwand der Grundkörper 3 des Implantatanaloges 2 flächig anliegt. Im Bereich des Verdrehschutzes 4 ist die Innenwand der Aufnahme 40 mit einer entsprechenden Abflachung versehen.

An den Aufnahmeteil 42 schließt sich ein Hülsenteil 43 an, der mit einer zylindrische Innenwand 46 ausgestattet ist und die Schraube 39 aufnimmt. Der Übergang zwischen der Aufnahme 40 und der zylindrischen Innenwand 46 bildet eine innere Schulterfläche 45, an die sich die Schraube 39 beim Befestigen des Implantatanaloges 2 abstützt. Das Implantatanalog 2 wird beim Verschrauben in die Aufnahme 40 gezogen, bis es mit seinem Bund 8, der kreisförmig ausgebildet ist, an der Stirnfläche 44 des Aufnahmeteiles 42 anliegt. Der Durchmesser des Bundes 8 entspricht dem Außendurchmesser des Aufnahmeteiles 42.

Der Hülsenteil 43, der den gleichen Außendurchmesser wie der Aufnahmeteil 42 aufweist, verhindert, dass bei der Herstellung des Meistermodells 1 das Modellmaterial an die Schraube 39 gelangt. Durch das offene Ende des Hülsenteiles 43 kann die Schraube 39 mit einem Schraubendreher einfach betätigt werden. Die Schraube 39 ist hierzu mit einem Schraubenschlitz 47 versehen. Mit der Schraube 39 lässt sich das Implantatanalog 2 in der Außenhülse 38 verspannen, so dass es nicht unbeabsichtigt gelöst werden kann. An der zylindrischen Außenseite 41 der Außenhülse 38 können Retentionen, wie Stege, Rippen oder dergleichen, als Verdrehschutz und/oder als Verankerungsmittel vorgesehen sein - nicht dargestellt. Es ist möglich, zumindest den Hülsenteil 43 im Querschnitt oval, elliptisch oder eckig auszubilden, so dass ein gesonderter Verdrehschutz nicht notwendig ist.

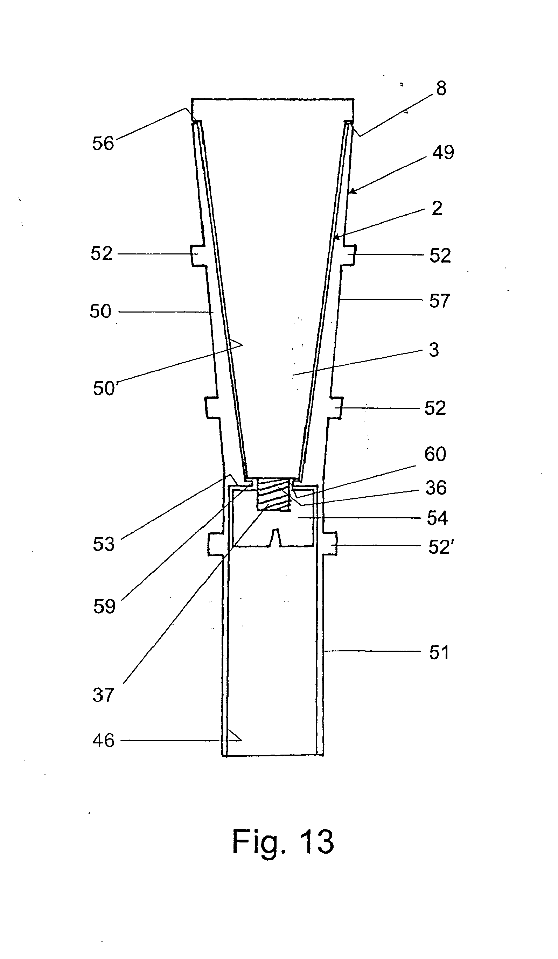

Gemäß Fig. 13 wird das Implantatanalog von einer Außenhülse 49 aufgenommen. Das Implantatanalog 2 kann entsprechend einem der Ausführungsbeispiele 2 bis 12 ausgebildet sein. Die Außenhülse 49 hat einen Aufnahmeteil 50 und einen Hülsenteil 51. Der Aufnahmeteil 50 weist eine Aufnahme 50' auf, an deren Innenwand der Grundkörper 3 des lmplantatanaloges 2 flächig anliegt. Die äußere Mantelfläche 57 des Aufnahmeteiles 50 ist ein Kegelmantel, dessen Durchmesser sich in Richtung auf den Hülsenteil 51 verjüngt. Seine äußere Mantelfläche ist zylindrisch.

Die Außenhülse 49 ist entsprechend der Ausführungsform nach Fig. 12 einstückig ausgebildet und kann aus metallischem Werkstoff oder Kunststoff, insbesondere Duroplast, bestehen. Die Außenhülse 49 ist im Bereich des Aufnahmeteiles 50 und des Hülsenteiles 51 mit Retentionen 52, 52' versehen, die durch hervorstehende Noppen, Zapfen, Stege und dergleichen gebildet sein können.

Am Übergang von der zylindrischen Innenwand 46 des Hülsenteiles 51 zur konischen Innenwand 50' des Aufnahmeteiles 50 befindet sich eine radial nach innen gerichtete Schulterfläche 53. Im Unterschied zur vorigen Ausführungsform ragt sie radial nach innen gerichtet über die Innenwand 50' hinaus. Auf diese Weise entsteht eine dünne Ringwand 59. Die Ringwand 59 begrenzt eine Öffnung 60, durch die der zapfenförmige Ansatz 36 des Grundkörpers 3 mit dem Aussengwinde in den Innenraum des zylindrischen Hülsenteiles 51 hineinragt.

In den Innenraum des Hülsenteiles 51 wird eine Schraube 54 mit Innengewinde eingesetzt und auf den Ansatz 36 aufgeschraubt, um das Implantatanalog 2 mit der Außenhülse 49 zu verspannen. Dabei wird der Grundkörper 3 des Implantatanaloges 2 soweit in den Innenkonus des Aufnahmeteiles 50 eingezogen, bis der Bund 8 auf der Stirnfläche 56 des Aufnahmeteiles 50 aufliegt.

Anstelle des Ansatzes 36 mit Außengewinde 37 kann im Grundkörper 3 des Implantatanaloges 2 eine Bohrung mit Innengewinde vorgesehen sein, in die zur Befestigung des Implantatanaloges 2 eine herkömmliche Schraube in den zylindrischen Teil der Außenhülse 49 eingeschraubt wird.

Eine weitere bevorzugte Befestigung des Implantatanaloges 2 in einer Außenhülse 38 ist in Fig. 14 dargestellt. Die Außenhülse 38 besitzt einen oberen Konus 55, der zur Aufnahme des Implantatanaloges 2 dient, und einen unteren Konus 56, der zum Konus 55 entgegengerichtet angeordnet ist und ein konisches Gegenstück 58 aufnimmt. Das Gegenstück 58, das eine Gewindebohrung 61 besitzt, wird von der Unterseite des Meistermodells 1 aus in die Außenhülse 38 eingesetzt und über das Außengewinde 37 des zapfenförmigen Ansatzes 36 mit dem Implantatanalog 2 verschraubt, um es mit der Außenhülse 38 zu verspannen. Beim Einschrauben des Gegenstückes 58 wird der Grundkörper 3 des Implantatanaloges 2 soweit in den oberen Konus 55 eingezogen bis der Bund 8 auf der Stirnfläche 62 der Außenhülse 38 aufliegt. Sofern eine exakte Reponierung im Meistermodell 1 gewährleistet ist, können das Implantatanalog 2 und das Gegenstück 58 auch ohne Außenhülse 38 direkt im Meistermodell 1 miteinander verspannt und das Implantatanalog 2 auf diese relativ einfache Weise sicher positioniert werden.

Die Arbeitsoberfläche resp. der Kopf 5 des Implantatanaloges 2 ist im dargestellten Beispiel mit einem sechskantförmigen Anschlussstück 12 ausgestattet. Anstelle dieses sechskantförmigen Anschlussstückes 12 können auch andere Mehrkantformen, wie beispielsweise drei-, vier- oder achtkantförmige Anschlussstücke vorgesehen werden. Alternativ können auch Anschlussstücke in Form eines Innenkonus, Innenkoni kombiniert mit einem Innenmehrkant, Bajonettverschlüsse, Torx-Ausbildungen oder Kombinationen derselben in der Arbeitsfläche oder im Kopf des Implantatanaloges 2 vorgesehen sein. Die Auswahl richtet sich ausschließlich nach dem jeweils inserierten Implantat.

Anstelle der beschriebenen Schraubverbindungen ist es auch möglich, das Implantatanalog 2 mit anderen Befestigungsmitteln in den Außenhülsen zu fixieren. Beispielsweise mit einer Rast- oder Schnappverbindung, mit einem Bajonettverschluss, mit einer Verriegelung, einem Splint und dergleichen.

Anstelle der konischen, ovalen, elliptischen oder eckigen Querschnittformen kann der Grundkörper 3 des Implantatanaloges 2 auch sternförmig oder, nierenförmig ausgebildet sein oder eine sonstige Konfiguration besitzen. In jedem Fall muss sich der Grundkörper 3 in Einsetzrichtung kegelförmig verjüngen.

Die beschriebenen Implantatanaloge 2 bzw. 13 können auch bei extrem nicht lotrechter Positionierung der inserierten Implantate sowohl für die Herstellung von Implantataufbauten für Einzelzahnimplantate als auch für Implantatbrücken eingesetzt werden. In die Aufnahmehülsen 6, 19, 38, 49 lassen sich die unterschiedlichsten Implantatanaloge 2 einsetzen, die jeweils flächig mit ihrem Grundkörper 3 an der Innenwand der Aufnahmen der Aufnahmehülsen anliegen. Die Implantatanaloge nach der Erfindung sind in allen üblichen Implantatsystemen der Zahnheilkunde einsetzbar. Die Implantatanaloge eignen sich aber auch zum Einscannen von Implantataufbauten.

### BEZUGSZEICHENAUFSTELLUNG

- 1: Meistermodell
- 2: Implantatanalog
- 3: Grundkörper
- 4: Verdrehschutz
- 5: Kopf
- 6: Hülse
- 7: Retention
- 8: Bund
- 9: Stirnseite
- 10: Mantel
- 11: Stirnseite
- 12: Anschlussstück
- 13: Ausgleichshülse / Innenhülse
- 14: Grundkörper
- 15: Rand
- 16: Nut
- 17: Innenwand
- 18: Retention
- 19: Außenhülse
- 20: Stirnseite
- 21: Steg
- 22: Steg
- 23: Mantelfläche
- 24: Mantelfläche
- 25: Innenwand
- 26: Steg
- 27: Öffnung
- 28: Steg

- 29: Ringteil
- 29': Öffnung
- 30: Stift
- 31: Profilierung
- 32: Rippe
- 33: Rippe
- 34:
- 35: Stirnfläche
- 36: Ansatz
- 37: Außengewinde
- 38: Außenhülse
- 39: Schraube
- 40: Aufnahme
- 41: zylindrische Außenseite
- 42: Aufnahmeteil
- 43: Hülsenteil
- 44: Stirnfläche
- 45: Schulterfläche
- 46: Innenwand
- 47: Schraubenschlitz
- 48: -
- 49: Außenhülse
- 50: Aufnahmeteil
- 50': Innenwand
- 51: Mantelfläche Hülsenteil
- 52: Retention
- 52': Retention
- 53: Schulterfläche
- 54: Schraube
- 55: Konus
- 56: Konus
- 57: Mantelfläche
- 58: Gegenstück
- 59: Ringwand
- 60: Öffnung
- 61: Gewindebohrung
- 62: Stirnfläche

## Patentansprüche

1. Implantatanalog zur passgenauen Herstellung von prothetischen Aufbauten für inserierte Zahnimplantate, das direkt oder über eine Modellhülse (6, 13, 38, 49) in ein Meistermodell (1) eingesetzt wird und dessen Implantatkopf (5) Mittel zur Aufnahme und Befestigung des jeweiligen Implantatsystems aufweist, während der Grundkörper (3) des Implantatanaloges (2) wenigstens über einen Teil seiner Länge im Querschnitt verjüngt ausgebildet ist, **dadurch gekennzeichnet, dass** der Implantatkopf (5) eine Arbeitsfläche (11) und ein Anschlussstück (12) besitzt und an seiner fußseitigen Stirnfläche (35) ein zapfenartiger Ansatz (36) mit einem Außengewinde für den Anschluss eines Schraubelementes (39, 54, 58) vorgesehen ist.

2. Implantatanalog nach Anspruch 1, **dadurch gekennzeichnet, dass** der Implantatkopf (5) winklig zur Längsachse des Implantatanaloges (2) angeordnet ist.

3. Implantatanalog nach Anspruch 1, **dadurch gekennzeichnet, dass** die Achse des Implantatkopfes (5) stumpfwinklig, mit unterschiedlicher Gradzahl zur Achse des Grundkörpers (3) angeordnet ist .

4. Implantatanalog nach Anspruch 1, **dadurch gekennzeichnet, dass** die Modellhülse (13) eine Innenhülse ist, der eine weitere Außenhülse (19) zugeordnet ist, wobei die Innenhülse (13) und die Außenhülse (19) über eine in der Mantelfläche der Innenhülse (13) angeordnete Nut (16), die in Hülsenlängsachse verläuft, und über einen längs verlaufenden Steg (26), der an der Innenwand der Außenhülse (19) vorgesehen ist, gegeneinander gegen Verdrehen gesichert sind und die Außenhülse (19) an ihrer Stirnseite mit dem kleineren Öffnungsdurchmesser einen durchgehenden Steg (28) mit einer Öffnung (29) für einen Stift (30) aufweist.

5. Implantatanalog nach Anspruch 4, **dadurch gekennzeichnet, dass** der Stift (30) an einem Ende mit einer Profilierung (31) versehen ist.

6. Implantatanalog nach Anspruch 4, **dadurch gekennzeichnet, dass** auf dem Außenmantel (34) der Außenhülse (19) axial und radial verlaufende Stege (21, 22), die als Verdrehsicherung dienen, vorgesehen sind.

7. Implantatanalog nach Anspruch 1 und 4, **dadurch gekennzeichnet, dass** das Implantatanalog (2) mit der Modellhülse (6, 38, 49) über ein in die Hülsen einsetzbares Schraubelement (39, 54, 58) verspannt ist.

8. Implantatanalog nach Anspruch 1, **dadurch gekennzeichnet, dass** das Implantatanalog (2) über Schraubelemente direkt mit dem Meistermodell (1) verschraubt ist.

9. Implantatanalog nach Anspruch 1, **dadurch gekennzeichnet, dass** die Hülsen (6, 38, 49) Aufnahmehülse bilden und einen Aufnahmeteil (42, 50) und einen Hülsenteil (43, 51) aufweisen.

10. Implantatanalog nach Anspruch 1, **dadurch gekennzeichnet, dass** sich der Hülsenteil (43, 51) an den Aufnahmeteil (42, 50) übergangslos anschließt und beide Hülsenteile eine gemeinsame Mantelfläche besitzen.

11. Implantatanalog nach Anspruche 1, **dadurch gekennzeichnet, dass** das Implantatanalog (2) über ein konisches Gegenstück (58) direkt mit dem Meistermodell (1) verschraubt ist.

12. Implantatanalog nach Anspruch 1, **dadurch gekennzeichnet, dass** das Implantatanalog (2) mit dem konischen Gegenstück (58) in einer Hülse (38) verspannt ist, die einen ersten Konus (55) zur Aufnahme des Implantatanaloges (2) und einen zu diesem entgegengesetzt angeordneten Konus (56) zur Aufnahme des Gegenstückes (58) besitzt.

13. Implantatanalog nach einem der Ansprüche 1 bis 12, **dadurch gekennzeichnet, dass** die Hülse (38, 49) einen zylindrisch ausgebildeten Außenmantel mit konstantem Außendurchmesser besitz.

14. Implantatanalog nach einem der Ansprüche 1 bis 13, **dadurch gekennzeichnet, dass** die Hülse (38, 49) einen konisch ausgebildeten Außenmantel aufweist und sich der Aufnahmeteil (50) in Richtung des Hülsenteiles (51) verjüngt.
